# EUROPEAN PATENT APPLICATION

(11) **EP 4 413 865 A1**
(43) Date of publication of application: **14.08.2024**
(21) Application number: 22878348.6
(22) Date of filing: 26.09.2022
(51) Int. Cl.: A23G 1/32, A23G 1/50

(54) **WATER-CONTAINING CHOCOLATE COMPOSITION AND PRODUCTION METHOD THEREOF**

(30) Priority: 04.10.2021 JP 2021163334
(71) Applicant: Lotte Co., Ltd., Tokyo 160-0023 (JP)
(72) Inventor: ARAKAWA Megumi, Tokyo 160-0023 (JP); MURAMATSU Miki, Saitama-shi, Saitama 336-0027 (JP); IGARASHI Takuma, Saitama-shi, Saitama 336-0027 (JP)
(74) Representative: Wächtershäuser & Hartz Patentanwaltspartnerschaft mbB
(86) International application number: PCT/JP2022/035590
(87) International publication number: WO 2023/058477

(57) **Abstract**

An object is to provide a water-containing chocolate composition that is highly chocolate-flavored and has sufficient fluidity. Provided is a water-containing chocolate composition, comprising moisture at 11% by weight or more and 18% by weight or less and cocoa butter and cocoa butter-like material at 9% by weight or more and 28% by weight or less, wherein the composition is an oil-in-water emulsion into which tempered chocolate dough and an aqueous mixture are emulsified.

## Description

### Technical Field

The present invention relates to a water-containing chocolate composition, a chocolate-containing food containing the water-containing chocolate composition, and a method for producing the water-containing chocolate composition and the chocolate-containing food.

### Background Art

Luxurious confections that were traded mainly at specialty stores before have been marketed at supermarkets and convenience stores in recent years with the progress of techniques for mass production or distribution. Examples of one of such confections include filling chocolates containing chocolate-flavored fillings.

However, filling chocolates that have been distributed in the market until now have insufficient chocolate flavors given from the fillings, contain fillings having insufficient fluidities, and therefore do not satisfy the palatability of consumers fully.

Although filling chocolates having chocolate fillings highly chocolate-flavored and having high fluidities have been sold at specialty stores, those cannot be mass-produced, is expensive, and have a very short best-before period of several days to several weeks.

PTL 1 discloses an oily confection, comprising a moisture-containing center, wherein the shell is less likely to subside. As described in paragraph 0031 in PTL 1, the center, namely filling, is produced from chocolate dough, and the production method includes a tempering step. Meanwhile, it is conceivable that the filling has moisture at a low rate, and does not form an oil-in-water emulsion.

### Citation List

### Patent Literature

PTL 1: Japanese Patent No. 5887105

### Summary of Invention

### Technical Problem

An object of the present invention is to provide a water-containing chocolate composition that is highly chocolate-flavored and has sufficient fluidity.

### Solution to Problem

The present inventors have earnestly investigated and consequently found that when tempered chocolate dough and an aqueous mixture are mixed and emulsified into an oil-in-water emulsion, a water-containing chocolate composition using chocolate dough highly chocolate-flavored can be obtained, and the obtained water-containing chocolate composition has very high fluidity. That is, the present invention provides a water-containing chocolate composition, comprising moisture at 11% by weight or more and 18% by weight or less and cocoa butter and cocoa butter-like material at 9% by weight or more and 28% by weight or less, wherein the composition is an oil-in-water emulsion into which tempered chocolate dough and an aqueous mixture are emulsified.

### Advantageous Effects of Invention

Furthermore, the water-containing chocolate composition of the present invention has the effect of maintaining its quality for a long period and imparting a sufficiently long best-before period to a chocolate-containing food containing the water-containing chocolate composition of the present invention.

### Brief Description of Drawings

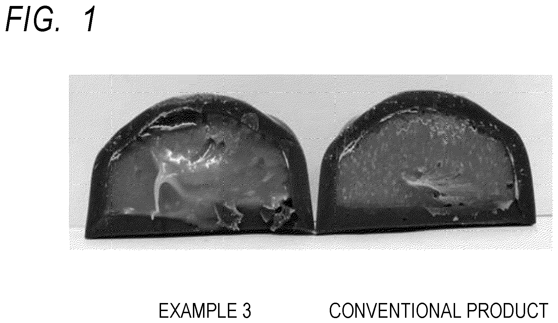

Fig. 1 shows cross sections of the water-containing chocolate composition-encapsulating shell chocolate of Example 3 (left) and a conventional product (right).

### Description of Embodiments

The present invention provides the following water-containing chocolate composition as one embodiment. That is, the present invention provides a water-containing chocolate composition, comprising moisture at 11% by weight or more and 18% by weight or less and cocoa butter and cocoa butter-like material at 9% by weight or more and 28% by weight or less, wherein the composition is an oil-in-water emulsion into which tempered chocolate dough and an aqueous mixture are emulsified.

### <Terms of chocolate and the like>

As used herein, cacao beans mean fermented and dried seeds of cacao (scientific name: Theobroma cacao). Cacao nibs mean cacao beans from which the shells are removed. Cacao mass means ground cacao nibs. Cocoa butter means oil and fat obtained from cacao beans, cacao nibs, or cacao mass. The chocolates as used herein are not limited by the stipulation of Chokoreto-rui no Hyoji nikansuru Kosekyosokiyaku (the Fair Competition Rules on Labeling of Chocolates), prescribed by the National Chocolate Industry Fair Trade Council, and refer to all the compositions containing cacao bean-derived components.

### <Water-containing chocolate composition>

The water-containing chocolate composition means a composition containing moisture and chocolate dough. The water-containing chocolate composition of the present invention contains moisture at 11% by weight or more and 18% by weight or less and cocoa butter and cocoa butter-like material at 9% by weight or more and 28% by weight or less. The water-containing chocolate composition of the present invention contains cocoa butter and cocoa butter-like material further preferably at 15% by weight or more and 27% by weight or less and more preferably 16% by weight or more and 20% by weight or less.

The chocolate dough to be used as a raw material preferably contains cocoa butter at 18% by weight or more. The water-containing chocolate composition preferably contains a saccharide or/and a sugar alcohol at 35% by weight or more and 50% by weight or less in total. The ratio of cocoa butter and the cocoa butter-like material to cocoa butter to the saccharide or/and the sugar alcohol as used here is based on dry weight, and the moisture rate is based on the total content of moisture derived from the raw materials.

### <Cocoa butter and cocoa butter-like material>

Cocoa butter and the cocoa butter-like material contains cocoa butter and a tempering-type cocoa butter alternative (CBA). CBAs is oils and fats having glyceride, trans acid, low trans acid, lauric acid, and the like as the structure. CBAs are classified into CBEs (cocoa butter equivalents), CBIs (cocoa butter improvers), CBRs (cocoa butter replacers), and CBSs (cocoa butter substitutes) by type. Among these, CBEs and CBIs, which are of the tempering type, can be used as cocoa butter and the cocoa butter-like material.

That is, cocoa butter and the cocoa butter-like material can contain the tempering type CBA in addition to cocoa butter in the water-containing chocolate composition of the present invention. However, the chocolate dough preferably contains cocoa butter at 18% by weight or more.

### <Chocolate dough>

The chocolate dough means dough to be chocolate material. The chocolate dough to be used for producing the water-containing chocolate composition preferably contains cocoa butter at 18% by weight or more.

The chocolate dough can contain cacao bean-derived raw materials, a cocoa butter alternative, a sweetener, a dairy product, oil and fat, a flavoring, an emulsifier, and the like as raw materials. As the cacao bean-derived raw materials, the chocolate dough can contain cocoa butter, cacao nibs, cacao mass, cocoa powder, and the like.

The sweetener includes saccharides, sugar alcohols, and high intensity sweeteners. Examples of the saccharides and the sugar alcohol are the same as the examples shown in the below-described section Saccharide or/and sugar alcohol. Examples of the high intensity sweetener include stevioside, glycyrrhizinic acid, aspartame, saccharin, acesulfame K, sucralose, neotame, alitame, and a mixture thereof.

As dairy products, milk, fresh cream, powdered skimmed milk, dried whole milk, concentrated skimmed milk, whey powder, sweetened condensed milk, and a mixture thereof can be exemplified.

The oil and fat include vegetable oils and fats and animal fats. As the vegetable oils and fats, palm oil, coconut oil, soybean oil, sunflower oil, brown rice bran oil, rice bran oil, olive oil, grape seed oil, walnut oil, peach kernel oil, virgin coconut oil, avocado oil, hemp oil, flax seed oil, almond oil, evening primrose oil, canola oil, cottonseed oil, sesame oil, or a mixture thereof can be exemplified. As the animal fats, beef tallow, lard, mutton tallow, fish oil, milk fat, or a mixture thereof can be exemplified.

As the flavoring, natural flavoring, synthetic flavoring, combined flavoring, alcohol, or a mixture thereof can be exemplified. The flavoring is preferably nature flavoring or synthetic flavoring. Among them, vanilla flavoring or milk flavoring is exemplified.

As the emulsifier, lecithin, a glycerin fatty acid ester, a sucrose fatty acid ester, a sorbitan fatty acid ester, and a mixture thereof can be exemplified.

The chocolate dough can be produced in accordance with a common method. Examples include the following method. A raw material mixture containing sugar at 10 to 60% by weight; cocoa butter, cocoa butter-like material, and other cacao-derived raw materials at 5 to 80% by weight; and powdered milk at 15 to 40% by weight is prepared. The raw material mixture is atomized with a refiner. The atomized raw material mixture is subjected to refinement (conching), and a flavoring, the remaining cocoa butter, an emulsifier, and the like are added thereto in the latter half stage of the refinement as needed to prepare chocolate dough.

### <Aqueous mixture>

The aqueous mixture comprises water and components that is soluble in water or mixed with water without being separated from water. As an example, the aqueous mixture can contain water, a sweetener, fruit juice, fruit sauce, ethyl alcohol, flavoring, an acidulant, dye, fresh cream, alcoholic beverages, glycerin, a thickener, an antioxidant, and the like. Examples of the sweetener and the flavoring are the same as the examples shown in the above-mentioned section Chocolate dough. Examples of the acidulant include aqueous citric acid, anhydrous citric acid, sodium citrate, lactic acid, sodium lactate, potassium lactate, malic acid, L-tartrates, succinates, or gluconates. The raw materials are mixed and subjected to a heating step and a mixing step as needed to obtain the aqueous mixture.

### <Saccharide or/and sugar alcohol>

The water-containing chocolate composition preferably contains a saccharide or/and a sugar alcohol at 35% by weight or more and 50% by weight or less in total. The adjustment the saccharide or/and the sugar alcohol to this range contributes to improvement in the fluidity of the water-containing chocolate composition. The saccharide or/and the sugar alcohol as used here include all the saccharides and the sugar alcohols derived from the chocolate dough, the aqueous mixture, or the other raw materials.

Examples of the saccharides include monosaccharides such as glucose, galactose, fructose, arabinose, xylose, fucose, sorbose, rhamnose, ribose, tagatose, isomerized liquid sugar, and N-acetylglucosamine; disaccharides such as sugar (sucrose), milk sugar (lactose), malt sugar (maltose), lactulose, trehalose, isotrehalose, neotrehalose, trehalulose, palatinose (isomaltulose), and melibiose; oligosaccharides such as α-cyclodextrin, β-cyclodextrin, isomalt oligosaccharide (isomaltose, isomaltotriose, panose, and the like), oligo-N-acetylglucosamine, galactosylsucrose, galactosyllactose, galactopyranosyl(β1-3) galactopyranosyl(β1-4) glucopyranose, galactopyranosyl (β1-3) glucopyranose, galactopyranosyl (β1-6) galactopyranosyl (β1-4) glucopyranose, galactopyranosyl (β1-6) glucopyranose, xylo-oligosaccharides (xylotriose, xylobiose, and the like), gentio-oligosaccharides (gentiobiose, gentiotriose, gentiotetraose, and the like), stachyose, theandeoligo, nigero-oligosaccharides (nigerose and the like), palatinose oligosaccharide, palatinose syrup, fructo-oligosaccharides (kestose, nystose, and the like), fructofranosylnystose, polydextrose, maltosyl-β-cyclodextrin, malto-oligosaccharides (maltotriose, tetraose, pentaose, hexaose, heptaose, and the like), raffinose, coupling sugar, soybean oligosaccharide, invert sugar, and starch syrup; and a mixture thereof. Examples of the sugar alcohols include isomaltitol, erythritol, xylitol, sorbitol, maltitol, maltotetraitol, maltotriitol, mannitol, lactitol, reducted Palatinose, reduced isomalto-oligosaccharide, reduced xylo-oligosaccharide, reduced gentio-oligosaccharide, reduced maltose starch syrup, reduced starch syrup, and a mixture thereof.

### <Tempering>

Tempering means operation for uniforming the crystals of oil and fat in chocolate or the like to form stable crystals for suppressing the bloom in chocolate or the like and improving the gloss, the meltability, the releasability, the heat resistance, and the like of chocolate or the like. The crystals of oil and fat in chocolate and the like include six types, namely types I to VI, and type V is a stable crystal type. Tempering includes two types of tempering, namely tempering by temperature treatment and tempering using a seed agent.

The tempering by the temperature treatment will be described. The above-mentioned six types of crystals have different melting points. The tempering by the temperature treatment utilizes the melting point difference therebetween. The operation is performed as follows. That is, chocolate dough is first warmed to around 40 to 50°C and molten. This is cooled to around 27 to 28°C and then rewarmed to around 28 to 31°C.

The cooling results in initial crystal formation, and the rewarming melts unstable crystals, followed by stable crystallization to form type V crystals. After the above-mentioned operation, further cooling and aging grow type V crystals.

The tempering using a seed agent will be described. The seed agent is an additive containing type V templates (seeds). The addition of the seed agent stably crystallizes chocolate dough based on the template to form V type crystals. The operation is performed by a method suitable for each seed agent, the temperature of chocolate dough is adjusted to a temperature suitable for adding the seed agent, and the seed agent at a suitable temperature is added thereto in a suitable amount.

In the present invention, the tempering may be the tempering by the temperature treatment or the tempering using the seed agent. The tempered chocolate dough refers to chocolate dough subjected to either of the above-mentioned types of tempering to form most crystals into type V crystals.

### <Emulsification>

Emulsification means preparing aqueous liquid and oleaginous liquid into a dispersion system solvent (emulsion). The liquids are vigorously stirred, resulting in emulsification. Alternatively, the use of an emulsifier emulsifies the liquids. Emulsions are classified into oil-in-water (O/W) type emulsions, in which oil drops are dispersed in water, and water-in-oil (W/O) type emulsions. Whether an emulsion is of the oil-in-water type or the water-in-oil type depends on the amounts of the liquids or the type of the emulsifier. If the emulsifier is used, lecithin, a glycerin fatty acid ester, a sucrose fatty acid ester, a sorbitan fatty acid ester, and a mixture thereof can be exemplified. The emulsifier is added to the aqueous liquid and the oil-based liquid, followed by mixing to emulsify the liquids.

In the present invention, the tempered chocolate dough and the aqueous mixture can be stirred with a mixer to prepare the oil-in-water emulsion. The weight ratio of the tempered chocolate dough to the aqueous mixture is appropriately selected, and is preferably 2:3 to 2:1. Although the emulsifier does not need to be used particularly, the emulsifier can be added as needed. The mixer is not particularly limited, and a homomixer, a homogenizer, an open mixer, or the like can be used.

### <Chocolate-containing food>

The present invention provides a chocolate-containing food, comprising a shell and a water-containing chocolate composition, wherein the water-containing chocolate composition is encapsulated in the shell as one of the further embodiments.

The shell can be made of chocolate, an oil and fat composition, cookies, a cake, candy, gummi candy, ice cream, and the like, and is particularly preferably chocolate.

If the shell as used herein is chocolate, the above-mentioned chocolate-containing food may be referred to as a water-containing chocolate composition-encapsulating shell chocolate. Examples of the method for producing the water-containing chocolate composition-encapsulating shell chocolate include the following example. According to the description of the above-mentioned chocolate dough, chocolate dough for an upper shell chocolate, and chocolate dough for a lower shell chocolate are prepared and tempered separately.

A step of encapsulating the water-containing chocolate composition in the shell that is chocolate is performed as follows. The tempered chocolate dough for the upper shell chocolate is filled into a mold and subjected to cooling pressing. After the solidification of the chocolate dough, superfluous chocolate dough is scraped off, and the upper shell chocolate is formed. Alternatively, the tempered chocolate dough for the upper shell chocolate is filled into a mold, the mold is reversed, and the chocolate is run down until the chocolate weighs a predetermined weight of the chocolate dough for the upper shell chocolate. The mold is then further reversed, and superfluous chocolate dough is scraped off, and the upper shell chocolate is formed. The cooled upper shell chocolate is filled with a water-containing chocolate composition prepared separately. The surface of the water-containing chocolate composition is leveled by vibration or the like, followed by further cooling. The tempered chocolate dough for the lower shell chocolate is filled here, and superfluous chocolate dough is scraped off, followed by cooling. The water-containing chocolate composition-encapsulating shell chocolate is then released from the mold, and the encapsulation step is finished to complete the shell chocolate. The completed water-containing chocolate composition-encapsulating shell chocolate is appropriately packed.

It is preferable that the rate of the water-containing chocolate composition in the water-containing chocolate composition-encapsulating shell chocolate be 40% by weight or more and 70% by weight or less, and the rate of the shell chocolate be 30% by weight or more and 60% by weight or less. The water-containing chocolate composition-encapsulating shell chocolate preferably weighs 3 to 50 grams each.

### <Best-before period>

The best-before period refers to a period in which the quality of an objective food is maintained, and the food can be eaten with relish. It was confirmed that, in the water-containing chocolate composition-encapsulating shell chocolate containing the water-containing chocolate of the present invention, the fluidity, the meltability, the luster, and the softness of the water-containing chocolate composition were satisfactorily maintained 9 months after the production. The upper limit of the best-before period of the chocolate-containing food comprising the water-containing chocolate composition of the present invention can be set at 5 to 18 months. Although the lower limit of the best-before period does not need to be set, the lower limit is preferably set at 1 month or more for the convenience of distribution in the market. The storage temperature is preferably 25°C or less and more preferably 23°C or less.

### <Production method>

As one of the further embodiments, the present invention provides a method for producing a water-containing chocolate composition, comprising a step of tempering chocolate dough (step A), and a step of mixing and emulsifying the tempered chocolate dough obtained in the step A and an aqueous mixture into an oil-in-water emulsion (step B), wherein the water-containing chocolate composition comprises moisture at 11% by weight or more and 18% by weight or less and cocoa butter and cocoa butter-like material at 9% by weight or more and 28% by weight. The chocolate dough preferably comprises cocoa butter at 18% by weight or more. The water-containing chocolate composition preferably comprises the saccharide or/and the sugar alcohol at 35% by weight or more and 50% by weight or less in total.

The above-mentioned description can be referred to for the present embodiment. The step A is more specifically either of the following steps A-1 and step A-2. In the step A-1, the chocolate dough is warmed to around 40 to 50°C and molten. This is cooled to around 27 to 28°C and then rewarmed to around 28 to 31°C. In step A-2, the temperature of the chocolate dough is adjusted to a temperature suitable for adding the seed agent, and the seed agent at a suitable temperature is added thereto in a suitable amount.

In the step B, the tempered chocolate dough and the aqueous mixture are more specifically stirred at a weight ratio of the tempered chocolate dough to the aqueous mixture of 2:3 to 2:1.

As one of the further embodiments, the present invention provides a method for producing a chocolate-containing food, comprising a step of tempering chocolate dough (step A), a step of mixing and emulsifying the tempered chocolate dough obtained in the step A and an aqueous mixture to obtain a water-containing chocolate composition as an oil-in-water emulsion (step B), and a step of encapsulating the water-containing chocolate composition obtained in the step B in a shell (step C), wherein the water-containing chocolate composition comprises moisture at 11% by weight or more and 18% by weight or less and cocoa butter and cocoa butter-like material at 9% by weight or more and 28% by weight or less. The chocolate dough preferably comprises cocoa butter at 18% by weight or more. The water-containing chocolate composition preferably comprises the saccharide or/and the sugar alcohol at 35% by weight or more and 50% by weigh or less in total.

The above-mentioned description can be referred to for the present embodiment. The item Chocolate-containing food can be referred to for step C.

### Examples

The Examples will be shown hereinafter. The present invention is not, however, limited to the following Examples.

### <Production of water-containing chocolate composition-encapsulating shell chocolates>

According to the above-mentioned method, the water-containing chocolate compositions of Examples 1 to 10 were produced. That is, tempered chocolate doughs and an aqueous mixture were emulsified to prepare the water-containing chocolate compositions. The tempering in Examples 1 to 8 was tempering by temperature treatment. The tempering in Examples 9 and 10 was tempering using a seed agent. Chocolate doughs and the aqueous mixture were emulsified without tempering the chocolate doughs to produce water-containing chocolate compositions as Comparative Examples 1 to 4.

The following Tables 1 to 3 show the compositional features of the water-containing chocolate compositions of Examples and Comparative Examples.

As a representative example, further details of the production of the water-containing chocolate composition-encapsulating shell chocolate of Example 3 will be shown below.

The chocolate dough tempered by temperature treatment and the aqueous mixture were stirred at a weight ratio of 1:1 with a mixer and emulsified into the oil-in-water emulsion to obtain the water-containing chocolate composition. The water-containing chocolate composition contained dried whole milk at 10% by weight, cocoa butter at 18% by weight, a saccharide and a sugar alcohol at 47% by weight, moisture at 16% by weight, and the others at 9% (all show the weight proportions including moisture in the blending).

A water-containing chocolate composition-encapsulating shell chocolate was produced according to the above-mentioned method using this water-containing chocolate composition. In the water-containing chocolate composition-encapsulating shell chocolate, the upper shell chocolate accounted for 35% by weight, the water-containing chocolate composition accounted for 40% by weight, and the lower shell chocolate accounted for 25% by weight.

In Tables 1 and 2, the total compositional feature of the cocoa butter and the cocoa butter-like material and the total composition of the saccharide and the sugar alcohol are expressed by dry weight. The rate of moisture is based on the total of moisture derived from the raw materials. The water-containing chocolate compositions of Examples and Comparative Examples were encapsulated in the chocolate shells to produce water-containing chocolate composition-encapsulated shell chocolates. These may be referred to as the water-containing chocolate composition-encapsulated shell chocolates of Examples 1 to 10, the water-containing chocolate composition-encapsulated shell chocolates of Comparative Examples 1 to 4, and the like for convenience.

### <Evaluation test after storage>

Comparative Examples 1 to 4 and Examples 1 to 10 were then subjected to evaluation tests after storage at 18°C for 4 to 8 weeks from the production date of the water-containing chocolate composition-encapsulating shell chocolates, which date was the same as the production date of the water-containing chocolate compositions. Table 1 shows the evaluation results. Note that 18°C is a temperature that is commonly used in aging for stabilizing chocolate products.

Furthermore, Comparative Example 2 and Example 3 were subjected to the evaluation tests and a viscosity measurement test after storage at 18°C for 24 hours, after storage at 23°C for 9 months, and after storage at 25°C for 9 months. Comparative Examples 1, 3, and 4 and Examples 1, 5, 8, 9, and 10 were subjected to the evaluation tests and the viscosity measurement test after storage at 23°C for 9 months. Tables 2 and 3 show the storage temperature, the storage period, evaluation results, and the viscosity measurement test results. In the table, the viscosity shows the average value of two measured value.

Table 4 shows the ratios of the viscosities after the storage of Examples 1, 5, 8, 9, and 10 to the viscosities after the storage of Comparative Examples having the corresponding compositional features for confirming the influence of the tempering of the chocolate doughs on increase in viscosity after the storage. When these ratios were calculated, the average value of two measured values was used as each viscosity.

The evaluation tests were performed as follows. The temperatures of the water-containing chocolate composition-encapsulating shell chocolates of Examples 1 to 10 and Comparative Examples 1 to 4 stored at the respective temperatures for the prescribed periods were adjusted to 25°C directly before the evaluation tests. Five panelists for analyzing chocolates ate and observed the water-containing chocolate composition-encapsulating shell chocolates of Examples 1 to 10 and Comparative Examples 1 to 4 after the storage periods to evaluate the water-containing chocolate compositions. The fluidity was evaluated as the main evaluation, and the meltability, the luster, and the softness were evaluated as secondary evaluations. The evaluation criteria were as follows. The five panelists for analysis agreed on all the evaluation results.

### Fluidity

A: The composition is semisolid and viscous, and feels slippery on the tongue in the mouth.
B: The composition is semisolid and viscous, and remains on the tongue.
C: The composition is semisolid and viscous, firms up, and remains on the tongue.
D: The composition is semisolid and viscous, and granulates to be spotted and nonuniform.

### Meltability

A: The composition sticks to the inside of the mouth for a short time.
B: The composition is weakly felt to stick to the inside of the mouth.
C: The composition is strongly felt to stick to the inside of the mouth.
D: The composition is strongly felt to stick to the inside of the mouth, and feels rough to the tongue.

### Luster

A: When the water-containing chocolate composition of a cut cross section of the water-containing chocolate composition-encapsulated shell chocolate receives light, the composition reflects the light, and is glossy.
B: When the water-containing chocolate composition of a cut cross section of the water-containing chocolate composition-encapsulated shell chocolate receives light, the composition weakly reflects the light as a whole.
C: When the water-containing chocolate composition of a cut cross section of the water-containing chocolate composition-encapsulated shell chocolate receives light, the composition weakly reflects the light only partially.
D: When the water-containing chocolate composition of a cut cross section of the water-containing chocolate composition-encapsulated shell chocolate receives light, the composition does not reflect the light at all.

### Softness

A: The composition gathers into a lump, but can be easily deformed by the tongue
B: The composition gathers into a lump, and is not easily deformed.
C: The composition gathers into a lump, and feels elastic.
D: The composition gathers into a lump, and is dried and hard.

The viscosity was measured as follows. That is, each water-containing chocolate composition was scraped away from each water-containing chocolate composition-encapsulated shell chocolate, and the dynamic viscoelasticity was measured with a rheometer (MCR102, manufactured by Anton Paar GmbH). The sample was placed between parallel plates the temperatures of which was adjusted to 20°C, and the temperature dispersion was measured. Specifically, sinusoidal vibration was applied to the sample while the sample was heated from 20°C to 35°C at a rate of temperature increase of 2°C/minute, and the viscosity at 30°C was calculated. The measurement conditions were as follows.
Measurement fixtures: Parallel plates having a diameter of 12 mm
Gap: 1 mm
Vibration frequency: 1 Hz
Measurement interval: 30 seconds
Strain amount: 1%

The viscosity is an index indicating the flexibility of an object. It can be said that as the viscosity decreases, the fluidity increases, and as the viscosity increases, the fluidity decreases.

It is preferable that the water-containing chocolate composition to be used for the water-containing chocolate composition-encapsulating shell chocolate of the present invention have high fluidity, and it is furthermore preferable that the state thereof hardly changes over time.

The results in Table 1 shows that the water-containing chocolate compositions of Examples 1 to 8, which were tempered by the temperature treatment, had high fluidity, meltability, luster, and softness all evaluated as A or B in the water-containing chocolate composition-encapsulated shell chocolates after the storage for 4 to 8 weeks from the production. The water-containing chocolate compositions of Examples 9 and 10, which were tempered with the seed agent, also had high fluidity, meltability, luster, and softness all evaluated as A or B in the water-containing chocolate composition-encapsulated shell chocolates 4 to 8 weeks after the production. In Comparative Examples 1 to 4, all properties were meanwhile evaluated as C or D after the storage for 4 to 8 weeks from the production. If the properties are evaluated as A or B, it is determined that the composition has a sufficient quality.

The results of Tables 2 and 3 show that the water-containing chocolate composition of Example 3 had very high fluidity, meltability, luster, and softness all evaluated as A or B in the water-containing chocolate composition-encapsulated shell chocolate after the storage for 24 hours and after the storage for 9 months from the production. In Comparative Example 2, the properties were evaluated as A after the storage for 24 hours, but all the properties were meanwhile evaluated as C or D after the storage for 9 months.

The water-containing chocolate compositions of Examples 1, 3, 5, 8, 9, and 10 had none of fluidity, meltability, luster, and softness evaluated as D after the storage at 23°C for 9 months. Especially the water-containing chocolate compositions of Examples 3, 5, 9, and 10 had high fluidity, meltability, luster, and softness all evaluated as A or B after the storage at 23°C for 9 months. It can be said from these results that the qualities after the storage of all the water-containing chocolate compositions of the present invention containing cocoa butter and cocoa butter-like material at 9% by weight or more and 28% by weight or less and using the tempered chocolate doughs were preferably maintained. It can be said that if cocoa butter and the cocoa butter-like material are contained at 15 to 27% by weight, the quality after the storage is more preferably maintained.

The results of Tables 2 and 4 show that the viscosities were maintained lower in all the tested Examples after the storage at 23°C than in the corresponding Comparative Examples, respectively. That is, the viscosities after the storage of all the water-containing chocolate compositions of the present invention containing cocoa butter and the cocoa butter-like material at 9% by weight or more and 28% by weight or less and using the tempered chocolate doughs were maintained low. Example 8 contained cocoa butter and the cocoa butter-like material at a content of 28% by weight, which was the largest amount in the range of the present invention, and exhibited a chocolate flavor particularly effectively. The viscosity after the storage at 23°C for 9 months of Example 8 was remarkably suppressed as compared with that of the corresponding Comparative Example 4 while such an effect was maintained. The viscosities of Examples 3, 5, 9, and 10 after the storage at 23°C for 9 months were lower than any of the viscosities of Comparative Examples after the storage. It can be said from these results that if the water-containing chocolate composition of the present invention contains cocoa butter and cocoa butter-like material at 15 to 27% by weight, the viscosity after storage is controlled lower.

The results of Tables 2 and 3 show that especially the water-containing chocolate composition of Example 3 had remarkably low viscosity also after the storage at 23°C for 9 months and also after the storage at 25°C for 9 months. It can be said from these results that if the water-containing chocolate composition of the present invention contains cocoa butter and cocoa butter-like material at 16 to 20% by weight, the viscosity after storage is controlled more remarkably low at any storage temperature.

**[Table 1]**

| Table 1 Evaluation tests after storage for 4 to 8 weeks from production | | | | | | | | | | | | | | | |
|---|---|---|---|---|---|---|---|---|---|---|---|---|---|---|---|
| | | Comparativ e Example 1 | Comparativ e Example 2 | Comparativ e Example 3 | Comparativ e Example 4 | Example 1 | Example 2 | Example 3 | Example 4 | Example 5 | Example 6 | Example 7 | Example 8 | Example 9 | Example 10 |
| Whether chocolate dough is tempered or untempered | | Untempere d | Untempere d | Untempere d | Untempere d | Tempered | Tempered | Tempered | Tempered | Tempered | Tempered | Tempered | Tempered | Tempere d | Tempere d |
| | | | | | | Temperatur e treatment | Temperatur e treatment | Temperatur e treatment | Temperatur e treatment | Temperatur e treatment | Temperatur e treatment | Temperatur e treatment | Temperatur e treatment | Seed agent | Seed agent |
| Composition al feature of water-containing chocolate composition | Moisture (% by weight) | 11 | 16 | 15 | 18 | 11 | 16 | 16 | 14 | 15 | 13 | 13 | 18 | 15 | 18 |
| | Cocoa butter and cocoa butter-like material (% by weight) | 9 | 18 | 26 | 28 | 9 | 13 | 18 | 23 | 26 | 25 | 25 | 28 | 26 | 28 |
| | Saccharid e + sugar alcohol (% by weight) | 35 | 47 | 40 | 50 | 35 | 47 | 47 | 43 | 40 | 42 | 46 | 50 | 40 | 50 |
| Evaluation | Fluidity | C | C | C | D | A | A | A | A | A | A | A | A | A | A |
| | Meltability | C | C | C | D | B | A | A | A | A | A | A | A | A | B |
| | Luster | C | C | C | D | A | A | A | A | A | A | A | B | A | A |
| | Softness | C | C | D | D | A | A | A | A | A | A | A | A | A | A |

**[Table 2]**

| Table 2 Results of evaluation tests and viscosity measurement test after storage at 23°C for 9 months | | | | | | | | | | | |
|---|---|---|---|---|---|---|---|---|---|---|---|
| | | Comparative Example 1 | Comparative Example 2 | Comparative Example 3 | Comparative Example 4 | Example 1 | Example 3 | Example 5 | Example 8 | Example 9 | Example 10 |
| Whether chocolate dough is tempered or untempered | | Untempered | Untempered | Untempered | Untempered | Tempered | Tempered | Tempered | Tempered | Tempered | Tempered |
| | | | | | | Temperature treatment | Temperature treatment | Temperature treatment | Temperature treatment | Seed aqent | Seed agent |
| Compositional feature of water-containing chocolate composition | Moisture (% by weight) | 11 | 16 | 15 | 18 | 11 | 16 | 15 | 18 | 15 | 18 |
| | Cocoa butter (% by weight) | 9 | 18 | 26 | 28 | 9 | 18 | 26 | 28 | 26 | 28 |
| | Saccharide + sugar alcohol (% by weight) | 35 | 47 | 40 | 50 | 35 | 47 | 40 | 50 | 40 | 50 |
| Evaluation | Fluidity | D | C | C | D | B | A | B | B | A | A |
| | Meltability | D | D | C | D | C | A | A | B | A | B |
| | Luster | D | D | C | D | C | B | A | C | A | A |
| | Softness | D | C | D | D | B | A | B | B | A | A |
| Viscosity (average value of two measured values) | | 6872 | 1965 | 2974 | 8847 | 1974 | 504 | 1740 | 2066 | 1103 | 122 |

**[Table 3]**

| Table 3 Results of evaluation tests and viscosity measurement test after storage at 18°C for 24 hours or after storage at 25°C for 9 months | | | | | |
|---|---|---|---|---|---|
| | | Comparative Example 2 | | Example 3 | |
| Whether chocolate dough is tempered or untempered | | Untempered | | Tempered | |
| | | | | Temperature treatment | |
| Compositional feature of water-containing chocolate composition | Moisture (% by weight) | 16 | | 16 | |
| | Cocoa butter (% by weight) | 18 | | 18 | |
| | Saccharide + sugar alcohol (% by weight) | 47 | | 47 | |
| Storage conditions | Storage temperature | 18 | 25 | 18 | 25 |
| | Storage period | 24 hours | 9 months | 24 hours | 9 months |
| Evaluation | Fluidity | A | C | A | B |
| | Meltability | A | D | A | B |
| | Luster | A | D | A | B |
| | Softness | A | C | A | B |
| Viscosity (average value of two measured values) | | 85 | 2490 | 123 | 558 |

**[Table 4]**

| Table 4 Comparison between viscosities of water-containing chocolate compositions after storage for at 23°C for 9 months | | | | | |
|---|---|---|---|---|---|
| Viscosity of Example 1/viscosity of Comparative Example 1 | Viscosity of Example 3/viscosity of Comparative Example 2 | Viscosity of Example 5/viscosity of Comparative Example 3 | Viscosity of Example 8/viscosity of Comparative Example 4 | Viscosity of Example 9/viscosity of Comparative Example 3 | Viscosity of Example 10/viscosity of Comparative Example 4 |
| 0.29 | 0.26 | 0.59 | 0.23 | 0.37 | 0.01 |

### <Image of water-containing chocolate composition after storage>

A shell chocolate wherein the water-containing chocolate composition of Example 3 is encapsulated, and the shell chocolate was stored at 18°C for 8 weeks from the production (Fig. 1 left) and a conventional shell chocolate 8 weeks after chocolate dough was prepared without tempering, and the shell chocolate was produced (Fig. 1 right) were cut. The water-containing chocolate compositions on the cross sections were observed. Fig. 1 shows a photographed image. It is found that the water-containing chocolate composition of Example 3 is high in fluidity, luster, and softness as compared with the conventional product.

This application claims priority to Japan Patent Application 2021-163334, filed on October 4, 2021. The contents thereof are cited and incorporated into this application.

## Claims

1. A water-containing chocolate composition,
comprising:
moisture at 11% by weight or more and 18% by weight or less, and
cocoa butter and cocoa butter-like material at 9% by weight or more and 28% by weight or less,
wherein the composition is an oil-in-water emulsion into which tempered chocolate dough and an aqueous mixture are emulsified.

2. The water-containing chocolate composition according to claim 1, wherein the chocolate dough comprises cocoa butter at 18% by weight or more.

3. The water-containing chocolate composition according to claim 1 or 2, comprising a saccharide or/and a sugar alcohol at 35% by weight or more and 50% by weight in total.

4. A chocolate-containing food, comprising a shell and the water-containing chocolate composition according to any one of claims 1 to 3, wherein the water-containing chocolate composition is encapsulated in the shell.

5. The chocolate-containing food according to claim 4, wherein the shell is chocolate.

6. A method for producing a water-containing
chocolate composition, comprising:
a step A of tempering chocolate dough, and
a step B of mixing and emulsifying the tempered chocolate dough obtained in the step A and an aqueous mixture into an oil-in-water emulsion,
wherein the water-containing chocolate composition comprises moisture at 11% by weight or more and 18% by weight or less and cocoa butter and cocoa butter-like material at 9% by weight or more and 28% by weight.

7. The method for producing a water-containing chocolate composition according to claim 6, wherein the chocolate dough comprises cocoa butter at 18% by weight or more.

8. The method for producing a water-containing chocolate composition according to claim 6 or 7, wherein the water-containing chocolate composition comprises a saccharide or/and a sugar alcohol at 35% by weight or more and 50% by weight or less in total.

9. A method for producing a chocolate-containing food, comprising:
a step A of tempering chocolate dough,
a step B of mixing and emulsifying the tempered chocolate dough obtained in the step A and an aqueous mixture to obtain a water-containing chocolate composition as an oil-in-water emulsion, and
a step C of encapsulating the water-containing chocolate composition obtained in the step B in a shell,
wherein the water-containing chocolate composition comprises moisture at 11% by weight or more and 18% by weight or less and cocoa butter and cocoa butter-like material at 9% by weight or more and 28% by weight.

10. The method for producing a chocolate-containing food according to claim 9, wherein the shell is chocolate.

11. The method for producing a chocolate-containing food according to claim 9 or 10, wherein the chocolate dough comprises cocoa butter at 18% by weight or more.

12. The method for producing a chocolate-containing food according to any one of claims 9 to 11, wherein the water-containing chocolate composition comprises a saccharide or/and a sugar alcohol at 35% by weight or more and 50% by weight or less in total.
